# FASCICULE DE BREVET EUROPEEN

(11) **EP 1 601 482 B1**
(45) Date de publication et mention de la délivrance du brevet: **03.01.2007**
(21) Numéro de dépôt: 04715930.6
(22) Date de dépôt: 01.03.2004
(51) Int. Cl.: B22F 3/12, B22F 5/00

(54) **PROCEDE DE FABRICATION D'EMPREINTES METALLIQUES DE MOULE PAR FRITTAGE DE POUDRES CERAMIQUES ET METALLIQUES**
VERFAHREN ZUR HERSTELLUNG VON METALLISCHEN FORMEN DURCH SINTERN VON METALLPULVERN UND KERAMIKPULVERN
METHOD OF PRODUCING METAL MOULD CAVITIES BY MEANS OF CERAMIC AND METAL POWDER SINTERING

(30) Priorité: 04.03.2003 FR 0302642
(43) Date de publication de la demande: 07.12.2005
(73) Titulaire: Phenix Systems, 63100 Clermont-Ferrand (FR)
(72) Inventeur: TEULET, Patrick, Didier, F-63200 Riom (FR)
(74) Mandataire: Myon, Gérard Jean-Pierre
(86) Numéro de dépôt international: PCT/FR2004/000466
(87) Numéro de publication internationale: WO 2004/080630

(56) Documents cités:
- WO-A-97/40777
- US-A- 4 314 399

## Description

L'invention a trait à un procédé de fabrication d'empreintes métalliques de moule par frittage d'une poudre métallique, ou d'un mélange de poudres métalliques, à partir d'un gabarit.

Dans le domaine du moulage de matériaux métalliques, ainsi que dans le domaine de l'injection plastique, qu'il soit effectué à basse ou à haute pression, il est connu de réaliser des empreintes de moule par diverses techniques telles que par usinage, par électroérosion, par frittage à l'aide d'un laser de poudre métallique en phase liquide, par collage de poudre métallique en présence de résine à l'aide d' un laser, la poudre étant spécifique au procédé, ou par projection de poudre métallique et fusion par laser. On connaît également, par US-A-4 314 399, un moule dont certaines parties sont réalisées à partir de céramique.

La réalisation d'un moule à partir d'un gabarit est connue de WO 97/40 777.

Ces différentes techniques sont relativement longues à mettre en oeuvre car elles nécessitent des étapes faisant appel à des technologies différentes. Elles ne permettent pas d'utiliser directement un gabarit, également appelé maître modèle, sans un traitement préalable de ce dernier.

De la même manière, en fonction de la complexité des formes de l'empreinte, de l'état de surface et de la précision désirés, certaines de ces techniques peuvent se révéler délicates à mettre en oeuvre. Dans certains cas, elles sont même inapplicables.

C'est à ces inconvénients qu'entend plus particulièrement remédier l'invention en proposant un procédé de fabrication d'empreintes métalliques de moule qui soit simple, rapide à mettre en oeuvre et qui permette la réalisation d'empreintes complexes tant au niveau de la forme que de l'état de la surface et de la précision demandés.

A cet effet, l'invention a pour objet un procédé de fabrication d'au moins une partie d'une empreinte métallique de moule par frittage d'une poudre métallique, ou d'un mélange de poudres métalliques, à partir d'au moins une partie d'un gabarit, ou maître modèle, tridimensionnel, positionnée dans un châssis de coulage, dans lequel on coule une poudre métallique, ou un mélange de poudres métalliques, avant frittage au four, le frittage étant suivi de l'enlèvement de la partie du gabarit, de manière à dégager un volume formant au moins une partie d'une empreinte destinée au moulage d'une pièce, caractérisé en ce que le procédé comprend des étapes consistant à :
- a) choisir une poudre céramique, ou un mélange de poudres céramiques, et une poudre métallique, ou un mélange de poudres métalliques, en fonction des paramètres de fabrication;
- b) déposer une couche homogène de faible épaisseur de la poudre céramique choisie, ou du mélange de poudres céramiques choisi, sur un support d'un dispositif de frittage en phase solide à l'aide d'un laser ;
- c) effectuer un frittage de la couche de poudre céramique, ou du mélange de poudres céramiques, sans liant ni fluide, selon des trajectoires préétablies de scannage par laser ;
- d) répéter les étapes b) puis c) jusqu'à obtention de la forme et des dimensions désirées d'au moins une partie du gabarit ;
- e) positionner au moins une partie du gabarit, sans retouche ni traitement postérieur à l'étape d), dans au moins un châssis de coulage dans lequel on coule une poudre métallique, ou un mélange de poudres métalliques, choisi à l'étape a) en vue de son frittage.

Grâce à l'invention, on obtient rapidement un gabarit à partir de poudre céramique présentant une précision dimensionnelle et un état de surface lui permettant d'être utilisé directement comme maître modèle pour obtenir une empreinte métallique de moule. Il n'est plus nécessaire d'effectuer des opérations de préparation du gabarit avant son utilisation comme, par exemple, un traitement thermique et/ou une reprise de ses dimensions ou de son état de surface.

Grâce à l'invention, on utilise une poudre métallique, ou des poudres métalliques, permettant de produire des empreintes de moule en un matériau compatible avec les pièces à réaliser par moulage, tout en tenant compte des contraintes de fabrication de ces dernières.

Selon des aspects avantageux mais non obligatoires de l'invention, le procédé incorpore une ou plusieurs des étapes suivantes :
- Lors de l'étape a), on choisit une poudre céramique, ou un mélange de poudres céramiques, dont la température de frittage est supérieure à la température de frittage de la poudre métallique, ou du mélange de poudres métalliques, utilisé pour réaliser au moins une partie de l'empreinte. Avantageusement, cette température de frittage de la poudre céramique, ou du mélange de poudres céramiques, est supérieure d'au moins 10 % à la température de frittage de la poudre métallique, ou du mélange de poudres métalliques.
- Lors de l'étape a), on choisit une poudre céramique, ou un mélange de poudres céramiques, parmi les produits disponibles dans le commerce, par exemple, parmi des alumines, des composés chimiques comprenant de l'alumine tels que la mullite, la cordiérite, des mélanges alumine zircone ou des mélanges comprenant des carbures tels que le carbure de silicium.
- Le passage d'au moins une partie du gabarit entre l'étape d) et l'étape e) s'effectue à l'aide d'un support mobile entre le dispositif de frittage à l'aide d'un laser et un dispositif de coulage de la poudre métallique, ou du mélange de poudres métalliques.
- Lors de l'étape e), une poudre métallique, ou un mélange de poudres métalliques, est amené dans au moins un châssis de coulage par un système d'alimentation en poudre tel qu'une trémie, un tuyau ou une pelle, de manière à répartir uniformément la poudre, ou le mélange de poudres, dans l'ensemble du volume de remplissage du châssis.
- Lors de l'étape e), on positionne dans au moins un châssis de coulage et dans au moins une partie du gabarit, au moins un conduit ou canal adapté pour permettre le refroidissement de l'empreinte, le passage d'éjecteur, l'alimentation en matière à mouler ou la pose d'insert. Avantageusement, ce conduit est positionné avant la fin du coulage de la poudre métallique, ou du mélange de poudres métalliques.
- Lors de l'étape e), on augmente la densité de la poudre métallique, ou du mélange de poudres métalliques, coulé dans au moins un châssis par compactage par vibration du support portant le châssis et/ou par vibration du système d'alimentation en poudre et/ou par mise en dépression du support et du système d'alimentation en poudre. Avantageusement, on assure ce compactage par une mise en dépression de l'enceinte et une vibration du support et du système d'alimentation en poudre, suivi de l'ajout d'un fluide pendant la phase de coulage, sous vibration, de la poudre métallique ou du mélange de poudres métalliques.
- Postérieurement à l'étape e), on effectue des opérations de finition sur au moins une partie de l'empreinte métallique frittée, par exemple par reprise d'usinage ou par polissage.

Outre une plus grande rapidité et simplicité des opérations de fabrication, l'approvisionnement en poudres, tant céramiques que métalliques, est facilité par l'utilisation de produits du commerce. Ainsi, il est plus aisé de réaliser des empreintes en adéquation avec la matière de la pièce à mouler.

L'invention sera mieux comprise et d'autres avantages de celle-ci apparaîtront plus clairement à la lumière de la description qui va suivre du procédé de fabrication d'une empreinte métallique conformément à l'invention, donnée uniquement à titre d'exemple et faite en référence aux dessins annexés dans lesquels :
- la figure 1 est une vue schématique générale d'un dispositif de frittage en phase solide à l'aide d'un laser, saris liant, de poudre céramique disposée en une couche de faible épaisseur sur un plateau mobile,
- la figure 2 est une vue générale des deux parties du gabarit en céramique d'une pièce creuse, obtenues par frittage, disposées sur un support amovible et directement utilisables comme maître modèle,
- la figure 3 est une vue de dessus des châssis de coulage en place autour des deux parties du gabarit précédemment obtenues et,
- la figure 4 est une vue schématique générale illustrant l'opération de coulage, à l'aide d'une trémie vibrante, d'une poudre métallique dans les châssis de coulage, le support amovible étant positionné sur une base vibrante, l'ensemble étant dans une enceinte de mise en dépression représentée schématisée et partiellement arrachée.

La première étape, non représentée, du procédé consiste, à partir du cahier des charges, d'une part de l'empreinte du moule et d'autre part des produits à mouler, à choisir une poudre céramique, ou un mélange de poudres céramiques, parmi les produits disponibles sur le marché. Il s'agit, par exemple, d'alumine et de mélanges comprenant ce produit. On utilise aussi un ou des composés chimiques existants à base d'alumine et de silice comme la mullite, la cordiérite (alumine, silice et magnésie) ou des mélanges à base d'alumine et de zircone ou à base d'alumine et de carbures tels que le carbure de silicium. On utilise également des mélanges créés « à façon » à partir de poudres commercialisées.

On s'attache plus particulièrement à choisir cette poudre, ou ce mélange, en fonction de sa granulométrie de manière à être, en fin de procédé, le plus près possible de l'état de surface désiré pour une empreinte donnée. Cet état de surface est dépendant, entre autres, de la porosité du gabarit. Plus cette dernière est élevée, moins l'état de surface est « bon ». De même, plus les couches successives de poudre que l'on fritte sont minces et plus l'état de surface est proche de celui fixé dans le cahier des charges.

Un autre paramètre important est la température de frittage de la poudre céramique, ou du mélange de poudres céramiques, qui doit être supérieure à la température de frittage de la poudre métallique, ou du mélange de poudres métalliques, servant à fabriquer l'empreinte du moule. Cet écart de température de frittage permet de préserver les caractéristiques du gabarit lors de la suite du procédé, et notamment d'assurer une bonne tenue mécanique et thermique du gabarit en céramique lors du frittage de la poudre métallique. Cet écart de température assure également un retrait moindre de l'empreinte lors du frittage de la poudre métallique, ou du mélange de poudres métalliques.

Afin de préserver une simplicité et une rapidité de mise en oeuvre du procédé, une température de frittage de la poudre céramique supérieure d'au moins 10 % à celle de la poudre métallique est nécessaire.

Lors de cette phase initiale, il est également important d'estimer les retraits dimensionnels intervenant lors du coulage et du frittage de l'empreinte afin d'obtenir un gabarit directement utilisable et d'avoir un minimum d'opérations de finition de l'empreinte. Lors de cette phase, les trajectoires de scannage du laser sont également définies. Ces trajectoires définissent le cheminement du faisceau laser au-dessus de la couche de poudre céramique afin de fritter cette dernière en respectant la géométrie finale du gabarit et en prévoyant la géométrie définitive de l'empreinte.

Le frittage de cette poudre céramique, ou de ce mélange de poudres céramiques, répartie en couches successives de faible épaisseur sur un plateau de travail mobile est effectué par un faisceau laser, sans apport de liant, selon le procédé de prototypage rapide décrit dans WO 99/42421.

Lors de cette phase, on choisit également la poudre métallique, ou le mélange de poudres métalliques, parmi celles disponibles sur le marché. Ce choix tient compte, notamment, des contraintes mécaniques et thermiques auxquelles l'empreinte est confrontée lors de son utilisation pendant des opérations de moulage proprement dites. Ce choix tient également compte d'autres paramètres connus de l'homme du métier tels que la tenue à l'abrasion requise pour l'empreinte, la précision géométrique de cette dernière et la complexité des formes de la pièce à mouler.

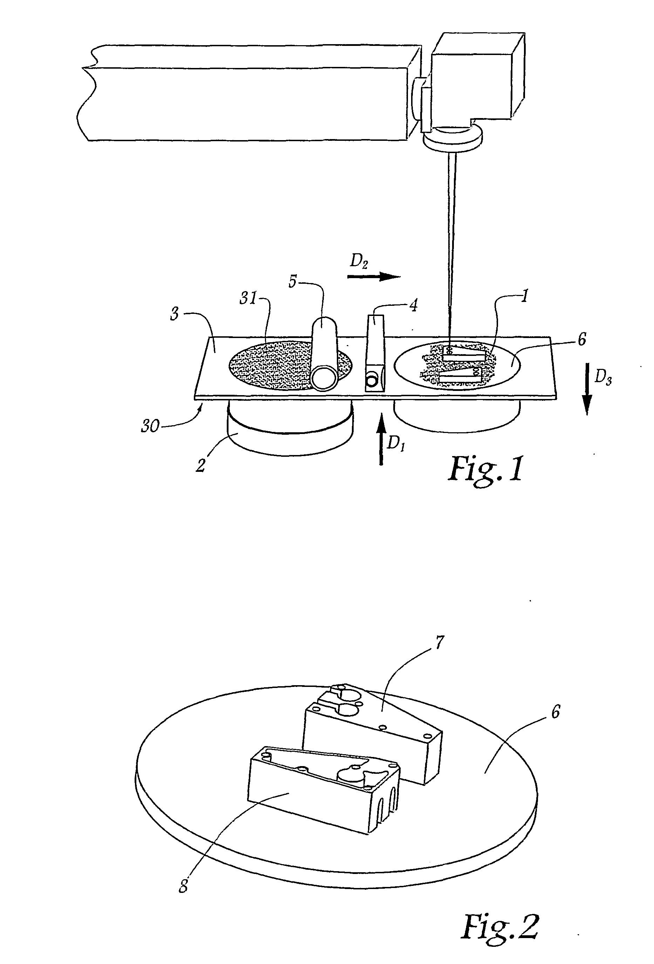

La figure 1 est une illustration schématique du frittage par laser du matériau céramique. Une couche 1 de poudre céramique de faible épaisseur est déposée à partir d'un moyen d'alimentation sur un plateau. Ce moyen est formé par un cylindre 2 d'alimentation, situé au voisinage d'une face inférieure 30 d'un plateau 3. Ce cylindre est équipé d'un piston interne, non représenté, mobile selon une direction D₁ globalement perpendiculaire à la face 30. Le cylindre 2 est situé en regard d'une ouverture 31, de forme complémentaire, ménagée dans le plateau 3.

La couche 1 est étalée à l'aide d'un organe 4 et compactée à l'aide du rouleau 5 sur un support 6 situé sous le laser. L'organe 4 et le rouleau 5 sont mobiles selon une direction D₂, globalement orthogonale à la direction D₁.

Plus la couche 1 est de faible épaisseur et plus il est aisé d'avoir une couche homogène et aisément frittable par le faisceau laser, cela de manière uniforme sur toute l'épaisseur. En contrepartie, plus les couches 1 successives sont minces et plus le temps de réalisation du gabarit est long. En pratique, le compromis entre la qualité du frittage de la poudre céramique et une réalisation du gabarit relativement rapide est obtenu à partir d'une épaisseur d'environ 10 microns.

Comme cela est représenté à la figure 1, le support 6 est mobile selon une direction D₃, globalement parallèle à la direction D₁ et orienté en sens inverse.

A la manière d'un millefeuilles, après chaque passage du laser et frittage d'une couche de poudre céramique, ou d'un mélange de poudres céramiques, une autre couche est déposée sur le support 6. Cette couche est à son tour frittée. Ces opérations unitaires sont répétées jusqu'à obtention de deux parties 7,8 tridimensionnelles d'un gabarit aux dimensions voulues. Dans cette configuration, ces deux parties correspondent aux deux moitiés d'une pièce creuse à mouler. Pour d'autres modes de réalisation, le gabarit peut être en une pièce ou comporter un nombre de parties supérieur à deux.

L'opération suivant le frittage du gabarit consiste à évacuer, par exemple par soufflage ou par aspiration, la poudre céramique non frittée présente sur le support 6.

Le support 6 est amovible par rapport au plateau 3 et il est aisément manipulable, généralement manuellement, compte tenu de la dimension et du poids des gabarits réalisés. Le dispositif de frittage laser utilisé a, par exemple, un support 6 d'environ 250 millimètres de diamètre et une hauteur utile de travail d'environ 300 millimètres.

Ce support 6 avec les deux parties 7,8 du gabarit dégagées de l'excès de poudre céramique non frittée, comme représenté à la figure 2, est amené dans la zone de travail d'un second dispositif permettant la réalisation de l'empreinte en métal.

La finition d'un tel gabarit est suffisante pour qu'il soit directement utilisable dans la suite du procédé, sans avoir besoin d'être repris, notamment par des opérations de déliantage, le frittage par laser étant effectué sans liant. De même, à la différence d'un gabarit en métal, il n'est plus nécessaire de lui faire subir un traitement thermique.

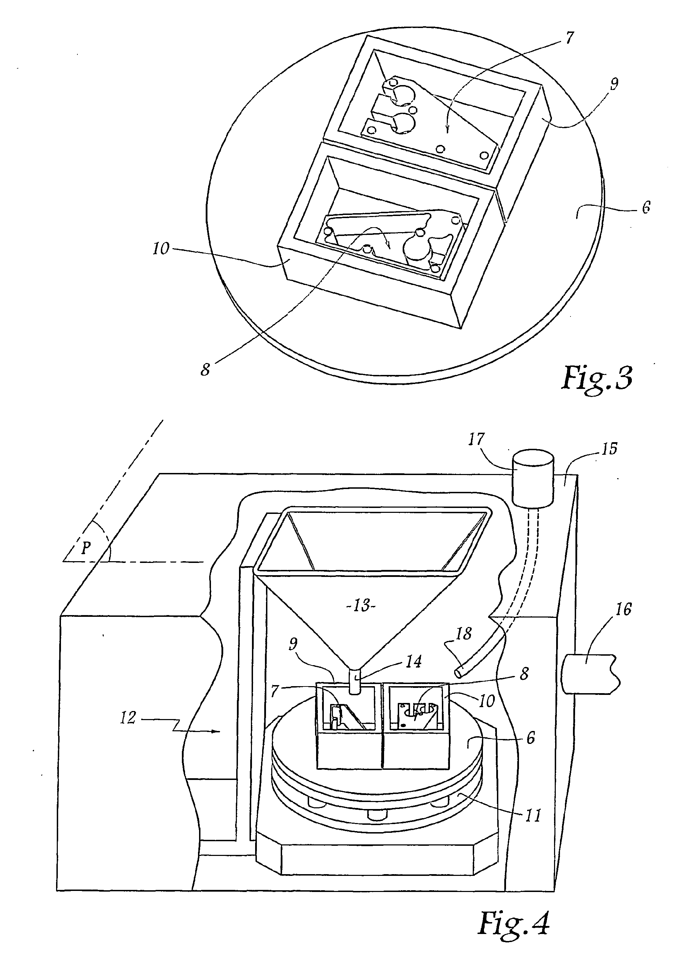

Comme représenté à la figure 3, l'opération suivante consiste à positionner autour des deux parties 7,8 deux châssis de coulage 9,10 adaptés pour retenir la poudre métallique, ou le mélange de poudres métalliques, avant son frittage. Il est nécessaire de centrer de la même manière les deux parties 7,8 au sein respectivement des châssis 9,10 en prenant soin qu'aucune paroi externe des parties 7, 8 ne soit en contact avec une paroi interne du châssis 9,10 dans lequel elle est positionnée.

Ces châssis 9,10 se présentent sous la forme de cadres de dimensions et de hauteur suffisantes pour abriter complètement une partie 7,8 du gabarit. Ces châssis 9,10 de coulage sont réalisés dans une matière inerte, ne subissant pas de déformation lors du frittage final.

Dans l'étape suivante représentée à la figure 4, le support 6, portant les deux châssis de coulage 9,10, est positionné sur une base 11 d'un dispositif 12 destiné au coulage de la poudre métallique, ou du mélange de poudres métalliques, dont est formé l'empreinte du moule.

Cette base 11 est surmontée d'un dispositif d'alimentation en poudre métallique. Comme représenté à la figure 4, le dispositif d'alimentation est de préférence une trémie 13 pourvue en partie basse d'un tuyau 14 d'évacuation de la poudre. En variante, il est possible d'avoir un dispositif formé par un tuyau souple relié à un réservoir externe de poudre métallique, l'acheminement de la poudre s'effectuant par gravité ou par pompage.

Le dispositif 12 est situé dans une enceinte 15. Cette enceinte 15 est adaptée pour assurer la mise en dépression du dispositif 12 et du support 6. Elle comprend, outre un conduit 16 d'évacuation de l'air relié à un dispositif d'aspiration non représenté, un réservoir 17 de fluide. Ce réservoir 17 permet de remplir, via un tuyau 18, les châssis 9,10 avec un fluide.

La répartition homogène de la poudre métallique dans l'ensemble du volume utile de chaque châssis 9, 10 est assurée par vibration de la base 11 et de la trémie 13.

La trémie 13 se déplace dans un plan P horizontal afin de permettre une répartition homogène de la poudre dans les châssis. Cette répartition est facilitée par le fait que le tuyau 14 est articulé ou souple.

Des conduits ou canaux, non représentés, sont si nécessaire positionnés lors de la répartition de la poudre, ou du mélange de poudres, dans les châssis. Ces conduits sont placés dans les châssis 9, 10 et les parties 7, 8 du gabarit. Ils permettent, lors du frittage de la poudre métallique, ou du mélange de poudres métalliques, de former des conduits dans l'empreinte. Ces conduits sont adaptés pour assurer le refroidissement de celle-ci lors du moulage, le passage d'éjecteur, l'alimentation en matière à mouler ou encore la pose d'insert.

Il est important pour garantir la tenue mécanique de l'empreinte frittée, d'effectuer un compactage de la poudre métallique, ou du mélange de poudres métalliques, déposé dans les châssis avant le frittage.

Ce compactage est obtenu en mettant en dépression l'enceinte 15 et en mettant en vibration la base 11. De cette manière, on favorise l'évacuation de l'air des parties 7, 8 du gabarit. On ajoute alors, tout en maintenant les vibrations, un fluide inerte vis à vis de la poudre métallique, ou du mélange de poudres métalliques, dans les châssis 9,10.

Ce fluide, par exemple de l'eau ou de l'alcool, permet d'évacuer l'air résiduel emprisonné dans les porosités des parties 7,8 du gabarit. On coule sous vibration la poudre, ou le mélange, dans les châssis 9,10 jusqu'à recouvrement des parties 7,8.

Dans une étape postérieure non représentée, on effectue le frittage de la poudre métallique dans un four. Ce frittage s'effectue, préférentiellement, sous vide afin d'en améliorer la qualité par évacuation de l'oxygène résiduel présent dans la poudre, ou le mélange de poudres.

Dans une dernière étape, on dégage les empreintes, ainsi réalisées, des châssis 9, 10 ainsi que les deux parties 7,8 du gabarit. On effectue ensuite des opérations de finition des empreintes. Ces opérations consistent, par exemple, à usiner des passages d'injecteurs, de canaux d'alimentation ou des évents si ceux-ci n'ont pas été réalisés auparavant. On effectue également, si nécessaire, la finition des plans de joint des empreintes et le polissage de certaines surfaces des empreintes.

Un tel procédé est particulièrement adapté au moulage de matériau par gravité, par exemple de matériau métallique et au moulage par injection à basse pression ou haute pression. Ce procédé permet de réaliser en temps masqué pour l'utilisateur à la fois le gabarit et l'empreinte du moule. L'utilisation de poudres, tant céramiques pour le gabarit que métalliques pour l'empreinte, qui sont issues du commerce permet de diminuer les coûts de production d'empreintes de moule tout en résolvant les problèmes d'approvisionnement et de stockage de ces poudres.

Si les températures de frittage des poudres, tant céramiques que métalliques, sont données par le fournisseur, il arrive que, pour certains mélanges non commercialisés, ces températures ne soient pas définies. Il convient alors de les déterminer expérimentalement à l'aide d'une éprouvette.

Dans un autre mode de réalisation, et si la granulométrie de la poudre métallique, ou du mélange de poudres métalliques, le permet, le compactage est obtenu sans ajout de fluide, seulement par mise en dépression et vibration.

Dans un autre mode de réalisation, on ne réalise qu'une partie de l'empreinte par ce procédé, les autres parties étant réalisées par d'autres procédés connus.

## Revendications

1. Procédé de fabrication d'au moins une partie d'une empreinte métallique de moule par frittage d'une poudre métallique, ou d'un mélange de poudres métalliques, à partir d'au moins une partie d'un gabarit, ou maître modèle, tridimensionnel, positionnée dans un châssis de coulage, dans lequel on coule une poudre métallique, ou un mélange de poudres métalliques, avant frittage au four, ledit frittage étant suivi de l'enlèvement de ladite partie du gabarit, de manière à dégager un volume formant au moins une partie d'une empreinte destinée au moulage d'une pièce, **caractérisé en ce que** ledit procédé comprend des étapes consistant à :
- a) choisir une poudre céramique, ou un mélange de poudres céramiques, et une poudre métallique, ou un mélange de poudres métalliques, en fonction des paramètres de fabrication ;
- b) déposer une couche homogène (1) de faible épaisseur de la poudre céramique choisie, ou du mélange de poudres céramiques choisi, sur un support (6) d'un dispositif de frittage en phase solide à l'aide d'un laser ;
-c) effectuer un frittage de ladite couche (1) de poudre céramique, ou du mélange de poudres céramiques, sans liant ni fluide, selon des trajectoires préétablies de scannage par laser ;
- d) répéter les étapes b) puis c) jusqu'à obtention de la forme et des dimensions désirées d'au moins une partie (7,8) du gabarit ;
- e) positionner au moins une partie (7,8) du gabarit, sans retouche ni traitement postérieur à l'étape d), dans au moins un châssis (9,10) de coulage dans lequel on coule une poudre métallique, ou un mélange de poudres métalliques, choisi à l'étape a) en vue de son frittage.

2. Procédé selon la revendication 1, **caractérisé en ce que**, lors de l'étape a), on choisit une poudre céramique, ou un mélange de poudres céramiques, dont la température de frittage est supérieure à la température de frittage de la poudre métallique, ou du mélange de poudres métalliques, utilisé pour réaliser au moins une partie de l'empreinte.

3. Procédé selon la revendication 2, **caractérisé en ce que** ladite température de frittage de la poudre céramique, ou du mélange de poudres céramiques, est supérieure d'au moins 10 % à la température de frittage de la poudre métallique, ou du mélange de poudres métalliques.

4. Procédé selon l'une des revendications précédentes, **caractérisé en ce que**, lors de l'étape a), on choisit une poudre céramique, ou un mélange de poudres céramiques, parmi les produits disponibles dans le commerce, par exemple, parmi des alumines, des composés chimiques comprenant de l'alumine tels que la mullite, la cordiérite, des mélanges alumine zircone ou des mélanges comprenant des carbures tels que le carbure de silicium.

5. Procédé selon l'une des revendications précédentes, **caractérisé en ce que** le passage d'au moins une partie du gabarit entre l'étape d) et l'étape e) s'effectue à l'aide d'un support (6) mobile entre le dispositif de frittage à l'aide d'un laser et un dispositif (12) de coulage de la poudre métallique, ou du mélange de poudres métalliques.

6. Procédé selon l'une des revendications précédentes, **caractérisé en ce que**, lors de l'étape e), une poudre métallique, ou un mélange de poudres métalliques, est amené dans au moins un châssis (9,10) de coulage par un système d'alimentation en poudre tel qu'une trémie (13), un tuyau ou une pelle, de manière à répartir uniformément ladite poudre, ou ledit mélange de poudres, dans l'ensemble du volume de remplissage dudit châssis (9,10).

7. Procédé selon l'une des revendications précédentes, **caractérisé en ce que**, lors de l'étape e), on positionne dans au moins un châssis (9,10) de coulage et dans au moins une partie (7,8) du gabarit, au moins un conduit ou canal adapté pour permettre le refroidissement de l'empreinte, le passage d'éjecteur, l'alimentation en matière à mouler ou la pose d'insert.

8. Procédé selon la revendication 7,**caractérisé en ce que** ledit conduit est positionné avant la fin du coulage de la poudre métallique, ou du mélange de poudres métalliques.

9. Procédé selon l'une des revendications précédentes, **caractérisé en ce que**, lors de l'étape e), on augmente la densité de la poudre métallique, ou du mélange de poudres métalliques, coulé dans au moins un châssis (9,10) par compactage par vibration du support (6) portant ledit châssis (9,10) et/ou par vibration du système (13) d'alimentation en poudre et/ou par mise en dépression dudit support (6) et dudit système (13) d'alimentation en poudre.

10. Procédé selon la revendication 9, **caractérisé en ce qu'**on assure ce compactage par une mise en dépression de l'enceinte (15) et une vibration du support (6) et du système (13) d'alimentation en poudre, suivi de l'ajout d'un fluide pendant la phase de coulage, sous vibration, de la poudre métallique ou du mélange de poudres métalliques.

11. Procédé selon l'une des revendications précédentes, **caractérisé en ce que**, postérieurement à l'étape e), on effectue des opérations de finition sur au moins une partie de l'empreinte métallique frittée, par exemple par reprise d'usinage ou par polissage.

## Claims

1. Method of manufacturing at least one part of a metal mould cavity by sintering a metal powder, or a mixture of metal powders, starting from at least one part of a three-dimensional template, or master model, positioned in a pouring frame into which a metal powder, or a mixture of metal powders, is poured before being sintered in a furnace, said sintering being followed by removal of said part from the template in order to free a volume that forms at least one part of a cavity for the moulding of a piece, **characterised in that** said method comprises steps which consist in:
a) choosing a ceramics powder, or a mixture of ceramics powders, and a metal powder, or a mixture of metal powders, as a function of the manufacturing parameters;
b) depositing a thin uniform layer (1) of the chosen ceramics powder, or of the chosen mixture of ceramics powders, on a support (6) of a solid phase laser sintering device;
c) carrying out sintering of said layer (1) of ceramics powder, or of the mixture of ceramics powders, without a binder and without liquid, according to paths pre-established by laser scanning;
d) repeating step b) and then c) until the desired shape and dimensions of at least one part (7, 8) of the template are obtained;
e) positioning at least one part (7, 8) of the template, without reworking or treatment following step d), in at least one pouring frame (9, 10) into which a metal powder, or a mixture of metal powders, chosen in step a) is poured in order to be sintered.

2. Method according to claim 1, **characterised in that**, in step a), there is chosen a ceramics powder, or a mixture of ceramics powders, the sintering temperature of which is greater than the sintering temperature of the metal powder, or of the mixture of metal powders, used to produce at least one part of the cavity.

3. Method according to claim 2, **characterised in that** said sintering temperature of the ceramics powder, or of the mixture of ceramics powders, is at least 10% greater than the sintering temperature of the metal powder, or of the mixture of metal powders.

4. Method according to any one of the preceding claims, **characterised in that**, in step a), there is chosen a ceramics powder, or a mixture of ceramics powders, from the products that are available commercially, for example from aluminas, chemical compounds comprising alumina, such as mullite and cordierite, alumina/zirconia mixtures or mixtures comprising carbides such as silicon carbide.

5. Method according to any one of the preceding claims, **characterised in that** the passage of at least one part of the template between step d) and step e) is effected by means of a support (6) which is movable between the laser sintering device and a device (12) for pouring the metal powder, or the mixture of metal powders.

6. Method according to any one of the preceding claims, **characterised in that**, in step e), a metal powder, or a mixture of metal powders, is introduced into at least one pouring frame (9, 10) by a powder supply system such as a hopper (13), a pipe or a shovel, in such a manner as to distribute said powder, or said mixture of powders, uniformly in the whole of the filling volume of said frame (9, 10).

7. Method according to any one of the preceding claims, **characterised in that**, in step e), there is positioned in at least one pouring frame (9, 10) and in at least one part (7, 8) of the template at least one conduit or channel suitable for permitting cooling of the template, the passage of an ejector, the supply of material for moulding or the fitting of an insert.

8. Method according to claim 7, **characterised in that** said conduit is placed in position before the end of pouring of the metal powder, or of the mixture of metal powders.

9. Method according to any one of the preceding claims, **characterised in that**, in step e), the density of the metal powder, or of the mixture of metal powders, poured into at least one frame (9, 10) is increased by compaction by vibrating the support (6) carrying said frame (9, 10) and/or by vibrating the powder supply system (13) and/or by placing said support (6) and said powder supply system (13) under low pressure.

10. Method according to claim 9, **characterised in that** compaction is effected by placing the enclosure (15) under low pressure and vibrating the support (6) and the powder supply system (13), followed by the addition of a liquid during the phase of pouring, with vibration, the metal powder or the mixture of metal powders.

11. Method according to any one of the preceding claims, **characterised in that**, following step e), finishing operations are carried out on at least one part of the sintered metal cavity, for example finish-machining or polishing.

## Patentansprüche

1. Verfahren zur Herstellung von mindestens einem Teil eines metallischen Formhohlraums durch Sintern eines Metallpulvers oder einer Metallpulvermischung ausgehend von mindestens einem Teil einer dreidimensionalen Schablone oder Mutterform, die in einem Gießrahmen angeordnet ist, in den vor dem Sintern im Ofen ein Metallpulver oder eine Metallpulvermischung gegossen wird, wobei auf das Sintern das Entfernen des Teils der Schablone folgt, um ein Volumen freizugeben, das mindestens einen Teil eines Formhohlraums bildet, der zum Gießen eines Werkstücks bestimmt ist, **dadurch gekennzeichnet, dass** das Verfahren Schritte umfasst, die in Folgendem bestehen:
-a) Wählen eines Keramikpulvers oder einer Keramikpulvermischung und eines Metallpulvers oder einer Metallpulvermischung in Abhängigkeit von den Herstellungsparametern;
-b) Ablagern einer homogenen Schicht (1) von geringer Dicke des gewählten Keramikpulvers oder der gewählten Keramikpulvermischung auf einem Träger (6) einer Vorrichtung zum Festphasensintern mit Hilfe eines Lasers;
-c) Durchführen einer Sinterung der Schicht (1) aus Keramikpulver oder Keramikpulvermischung ohne Bindemittel oder Fluid nach vorbestimmten Linien zum Abtasten durch den Laser;
-d) Wiederholen der Schritte b), dann c) bis zum Erhalt der gewünschten Form und Abmessungen von mindestens einem Teil (7, 8) der Schablone;
-e) Anordnen von mindestens einem Teil (7, 8) der Schablone ohne Nachbearbeitung oder Behandlung nach dem Schritt d) in mindestens einem Gießrahmen (9, 10), in den ein in Schritt a) gewähltes Metallpulver oder eine Metallpulvermischung gegossen wird, im Hinblick auf seine bzw. ihre Sinterung.

2. Verfahren nach Anspruch 1, **dadurch gekennzeichnet, dass** im Schritt a) ein Keramikpulver oder eine Keramikpulvermischung gewählt wird, dessen bzw. deren Sintertemperatur höher ist als die Sintertemperatur des Metallpulvers oder der Metallpulvermischung, das bzw. die verwendet wird, um mindestens einen Teil des Formhohlraums zu bilden.

3. Verfahren nach Anspruch 2, **dadurch gekennzeichnet, dass** die Sintertemperatur des Keramikpulvers oder der Keramikpulvermischung um mindestens 10 % höher ist als die Sintertemperatur des Metallpulvers oder der Metallpulvermischung.

4. Verfahren nach einem der vorhergehenden Ansprüche, **dadurch gekennzeichnet, dass** beim Schritt a) ein Keramikpulver oder eine Keramikpulvermischung unter den im Handel erhältlichen Produkten gewählt wird, z.B. unter Aluminiumoxiden, chemischen Verbindungen, die Aluminiumoxid enthalten, wie z.B. Mullit, Cordierit, Mischungen Aluminiumoxid Zirkonoxid oder Mischungen, die Carbide enthalten, wie z.B. Siliciumcarbid.

5. Verfahren nach einem der vorhergehenden Ansprüche, **dadurch gekennzeichnet, dass** der Übergang von mindestens einem Teil der Schablone zwischen dem Schritt d) und dem Schritt e) mit Hilfe eines Trägers (6) erfolgt, der zwischen der Vorrichtung zum Sintern mit Hilfe eines Lasers und einer Vorrichtung (12) zum Gießen des Metallpulvers oder der Metallpulvermischung beweglich ist.

6. Verfahren nach einem der vorhergehenden Ansprüche, **dadurch gekennzeichnet, dass** beim Schritt e) durch ein Pulverzufuhrsystem wie z.B. einen Trichter (13), ein Rohr oder eine Schaufel ein Metallpulver oder eine Metallpulvermischung in mindestens einen Gießrahmen (9, 10) eingeführt wird, so dass das Pulver oder die Pulvermischung gleichförmig im gesamten Füllvolumen des Rahmens (9, 10) verteilt wird.

7. Verfahren nach einem der vorhergehenden Ansprüche, **dadurch gekennzeichnet, dass** beim Schritt e) in mindestens einem Gießrahmen (9, 10) und in mindestens einem Teil (7, 8) der Schablone mindestens eine Leitung oder ein Kanal angeordnet wird, die bzw. der so angepasst ist, dass die Abkühlung des Formhohlraums, der Durchgang des Auswerfers, die Versorgung mit zu gießendem Werkstoff oder das Anbringen eines Einsatzes ermöglicht wird.

8. Verfahren nach Anspruch 7, **dadurch gekennzeichnet, dass** die Leitung vor dem Ende des Gießens des Metallpulvers oder der Metallpulvermischung angeordnet wird.

9. Verfahren nach einem der vorhergehenden Ansprüche, **dadurch gekennzeichnet, dass** beim Schritt e) die Dichte des Metallpulvers oder der Metallpulvermischung, das bzw. die in mindestens einen Rahmen (9, 10) gegossen wird, durch Verdichtung erhöht wird, und zwar durch Vibration des Trägers (6), der den Rahmen (9, 10) trägt, und/oder durch Vibration des Systems (13) zur Versorgung mit Pulver und/oder durch Versetzen des Trägers (6) und des Systems (13) zur Versorgung mit Pulver in Unterdruck.

10. Verfahren nach Anspruch 9, **dadurch gekennzeichnet, dass** diese Verdichtung gewährleistet wird durch ein Versetzen des Mantels (15) in Unterdruck und eine Vibration des Trägers (6) und des Systems (13) zur Versorgung mit Pulver, gefolgt vom Zusatz eines Fluids während der Phase des Gießens des Metallpulvers oder der Metallpulvermischung unter Vibration.

11. Verfahren nach einem der vorhergehenden Ansprüche, **dadurch gekennzeichnet, dass** nach dem Schritt e) Endbearbeitungsvorgänge an mindestens einem Teil des gesinterten metallischen Formhohlraums durchgeführt werden, zum Beispiel durch wiederholte Bearbeitung oder durch Polieren.
